# EUROPEAN PATENT SPECIFICATION

(11) **EP 2 901 435 B1**
(45) Date of publication and mention of the grant of the patent: **05.05.2021**
(21) Application number: 13842630.9
(22) Date of filing: 07.06.2013
(51) Int. Cl.: G08C 17/02, H04W 88/02, H04L 12/28, H04L 29/08

(54) **A DEVICE CONTROL METHOD AND APPARATUS**
GERÄTESTEUERVERFAHREN UND VORRICHTUNG
PROCÉDÉ ET APPAREIL DE COMMANDE DE DISPOSITIF

(30) Priority: 26.09.2012 CN 201210361193
(43) Date of publication of application: 05.08.2015
(73) Proprietor: Tencent Technology Shenzhen Company Limited, Shenzhen, Guangdong 518044 (CN)
(72) Inventor: YAN, Jun, Shenzhen Guangdong 518044 (CN); LUO, Xuan, Shenzhen Guangdong 518044 (CN)
(74) Representative: Epping - Hermann - Fischer
(86) International application number: PCT/CN2013/076932
(87) International publication number: WO 2014/048133

(56) References cited:
- WO-A1-2014/040425
- CN-A- 102 427 472
- CN-A- 102 930 705
- US-A1- 2009 298 525
- US-A1- 2009 327 436
- US-A1- 2010 042 233
- US-A1- 2010 279 675
- US-A1- 2011 131 518
- US-A1- 2011 246 902
- US-A1- 2013 300 547

## Description

### Cross Reference to Related Application

This application claims the priority benefit of Chinese Patent Application No. 201210361193.4, filed on September 26, 2012.

### Field

This relates generally to network communication, and in particular, to a device-control method and apparatus.

### Background

Computer networks have become prevalent in the current environment. A local area network (LAN) such as a home network can have more and more terminal devices such as mobile phones and personal computers (PC) connected to it. The interactions among the devices are also becoming more frequent.

Because of the portability of the mobile terminals, more and more users wish to use a mobile terminal to control other devices in the household as a way of performing device control. However, this technology is not available in any of the currently-available technologies.

US2011131518 (A1) discloses a control apparatus including a display module configured to display a window in a first window state or a second window state on a display screen of a display device, the display module displaying a server object corresponding to a digital media server in a first area of the window and a renderer object corresponding to a digital media renderer in a second area of the window when the window in the first window state is displayed, the display module displaying the window in the second window state when the server object is selected, the display module displaying one or more content objects corresponding to the one or more digital media contents in the first area and the renderer object in the second area when the window in the second window state is displayed.

WO2012099370 (A2) discloses an alarm-setting method which comprises the following steps: discovering a first control target apparatus including an alarm service and a second control target apparatus including a content-providing service; receiving a list of apparatuses registered for the alarm service from the first control target apparatus; receiving, from the second control target apparatus, content information capable of being provided; selecting an alarm object apparatus and content based on the list of apparatuses and content information, respectively; and transmitting an alarm-setting request message to the first control target apparatus based on the selected alarm object apparatus and content.

US2010279675 (A1) discloses methods, systems, and apparatus for processing a remote lock command message. The method includes receiving, by a mobile device, a remote lock command message comprising a lock command and specifying a passcode to be set by the mobile device, locking the mobile device in response to the received remote lock command message, setting an unlock passcode associated with the mobile device to the specified passcode, and generating an acknowledgement message in response to the remote lock command message. Further, receiving the remote lock command message can include accessing a subscribed topic hosted on a notification service, the subscribed topic being associated with a lock command, and retrieving the remote lock command message from the subscribed topic. Additionally, locking the mobile device can include locking a display such that access to information stored on the mobile device and device functionality are blocked.

### Summary

One of the problems that can be solved with embodiments of the present disclosure is to provide a device control method and apparatus to control a device in a local area network (LAN).

To resolve the above-described problem, embodiments of the disclosure can provide a device control method as defined in the attached claim 1.

In another aspect, embodiments of the present disclosure can provide a remote control device as defined in the attached claim 5.

In another aspect, an example of the disclosure can provide a mobile terminal including the above-described remote control device.

In some embodiments, the device control process can be realized through processes including discovering a device, discovering the device's device control service, and generating and transmitting of control information. This can provide a technical solution for device control among different devices on a LAN, thereby solving the problems with the existing technology and increasing the interactions among the devices on a LAN.

### Brief Description of the Drawings

Fig. 1 illustrates the exemplary steps in a device control method, according to an embodiment of the present disclosure.
Fig. 2 is a flow chart illustrating the exemplary steps of a device control method on a LAN, according to an embodiment of the present disclosure.
Fig. 3 illustrates an embodiment in which a mobile phone and a PC are connected via the Wi-Fi network, according to an embodiment of the present disclosure.
Fig. 4 is a flowchart illustrating the exemplary steps of an embodiment, in which a mobile terminal (e.g., a mobile phone) and a controlled device (e.g., a PC) are connected via a WAN, according to an embodiment of the present disclosure.
Fig. 5 is a structure diagram of an exemplary device control apparatus, according to an embodiment of the present disclosure.
Fig. 6 is a block diagram illustrating the exemplary units of a device discovering module, according to an embodiment of the present disclosure.
Fig. 7 is block diagram illustrating an exemplary structure of a device control apparatus, according to an embodiment of the present disclosure.

### Detailed Description

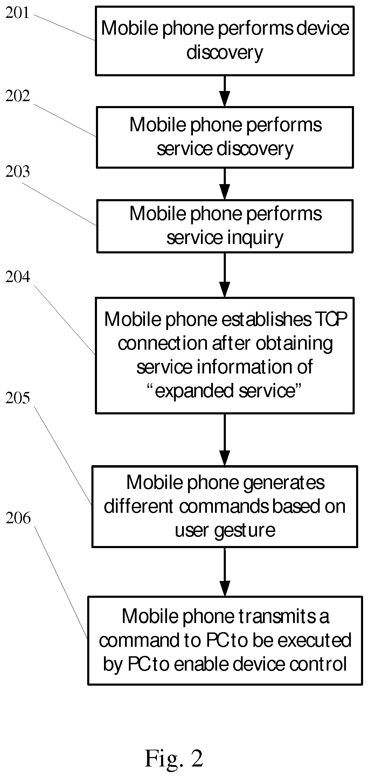

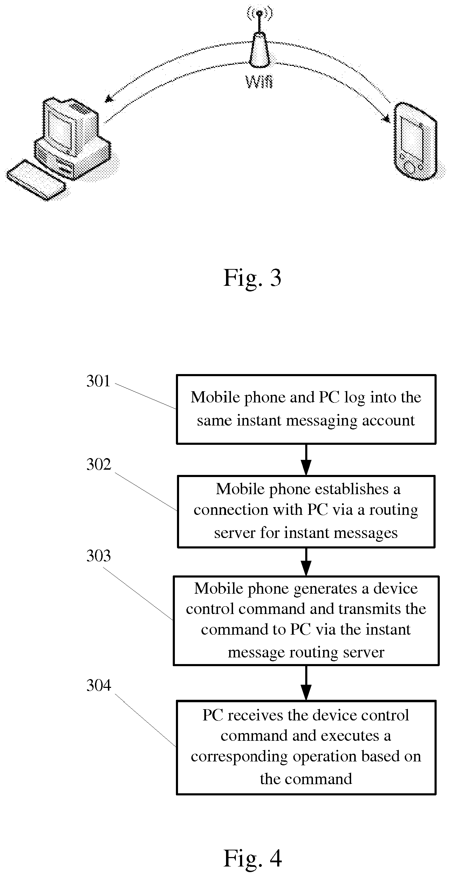

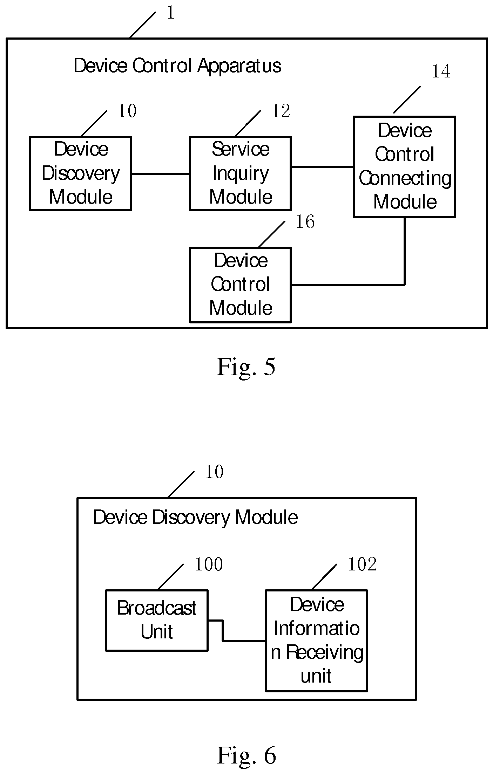

A detailed description of the technical solutions of the embodiments of the present disclosure is provided below in view of the accompanying drawings. It should be understood that the embodiments described below are representative embodiments of the present disclosure rather than a complete disclosure of the every possible embodiment The embodiment covered by the invention as claimed comprises method step 301 shown in figure 3 followed by steps 202-206 shown in figure 2 as well as the apparatus depicted with reference to figures 5-7 comprising the modules to implement these steps. The other embodiments described in this detailed description are not part of the invention as claimed but should be seen as mere examples useful for understanding the invention.

The present disclosure can also include any other embodiments that can be derived from these disclosed embodiments by a person with ordinary skill in the art without any additional inventive work. It is to be understood that other embodiments can be used and structural changes can be made without departing from the scope of the embodiments of this disclosure.

This disclosure generally relates to a method and apparatus for using one device to control the operation of at least one other device over a network. As referred hereinafter, devices can be any electronic device capable of connecting to a network through a wireless or wired network for transmitting and/or receiving data. Such devices can include, but are not limited to, PCs, Macs, desktop computers, laptop computers, tablet PCs, smartphones including iPhones, Android phones, Windows phones, and Blackberries, e-readers, in-car communication devices, televisions, gaming consoles and other consumer electronic devices with sufficient network capabilities.

Furthermore, the devices can also be referred to as terminals (*i.e.,* "device" and "terminal" are interchangeable terminologies). For example, a mobile terminal can be any mobile devices and a controlled device can be any terminal on the network. A device that can control another device connected to the same network can be referred to as a controlling device or controlling terminal. In the embodiments discussed below, the controlling device/terminal can be a mobile terminal such as a mobile phone, smartphone, and tablet PC. The device that can be controlled by the controlling device/terminal can be referred to as the controlled device. In some of the embodiments discussed below, the controlled device can be a PC. In other embodiments, the controlled device can be, for example, a laptop, TV, or gaming console. In yet some other embodiments, the controlled device can also be a mobile device. As will be described in detail below, a controlling device can control multiple controlled devices, either simultaneously or individually. A controlled device can be controlled by multiple controlling devices. For example, a PC can receive control command from two smartphones. A device can be both a controlling device and a controlled device in that it can be used for controlling the operation on another device and also receive control command from another device.

As described in the embodiments below, in operation, the controlling device (e.g., a mobile terminal) and the at least one controlled device (e.g., a PC) can be connected to the same network. The network can be any computer network such as the Internet, a LAN, wide area network (WAN), cellular network, Wi-Fi network, and virtual private network (VPN). To perform remote control of one or more controlled devices, the controlling device can send out a broadcast including its own IP address or other connection information over the network (e.g., a LAN). One or more of the controlled devices can be discovered by responding to the broadcast with their own device information such as IP addresses. A connection (e.g., a TCP connection) can then be established between the devices based on this information. The controlling device can then obtain service information from the controlled device. The service information can indicate the type of services available at the controlled device. Some of these services can be referred to as "expanded services," which can include, for example, a remote control service that can perform control operations locally on the controlled device based on control information received from the controlling device. Control information can correspond to one or more control operations and be transmitted over the established connection to a specific service port number associated with the remote control service. In various embodiments, the control information and other information exchanged between the controlling device and the controlled device can be in any protocol shared by the devices.

The controlling device and the at least one controlled device can also communicate through a shared account of an application running on both devices. The application can be, for example, an instant messaging application such as Microsoft's MSN Messenger or Tencent's QQ. It can also be any other network-based communication application that requires an account to transmit and receive information over a network. In various embodiments, the network can be the Internet or a WAN. A controlling device can perform remote control operations on one or more other devices logged into the same account as the controlling device. In particular, the controlling device and the one or more controlled device can be logged into the same application using the same account. Based on information associated with the account (e.g., account number, username, user ID, etc.), the controlling device can identify the controlled device(s) and connect to the controlled devices via, for example, a network server hosting the application. In addition, the server can route information including control commands between the controlling device and the controlled device(s).

The control information or control command generated from the control information can be for performing any control operations on the controlled device. The control information can be generated based on user input on the controlling device. The user input can of any type or in any form. For example, it can be touch input, gesture input, voice input, input via virtual or physical input devices such as keyboard and mouse, visual input received by a camera, or a combination of multiple inputs of the same type of different types. Touch input and gesture input can include single point and multi-point input. In some embodiments, the user input detected by the controlling device can be the same input for performing a desired operation locally on the controlled device. For example, the user can remotely move a cursor displayed on the controlled device (e.g., a tablet PC) by moving a finger on the screen of the controlling device (e.g., a smartphone).

Any control operations can be performed remotely on the controlled device in response to the control information/command received from the controlling device. Such control operations can include, for example, basic input operations such as a mouse click, cursor movement, page scrolling, text input, zooming, scaling, etc. They can also include application-specific operations. For example, game input can be received from the controlling device to play a game on the controlling device. For example, a user can use his smartphone as a remote control to play a driving game on a TV by tilting the smartphone in different directions to control a car in the driving game. The tilting input can be detected by an accelerometer in the smartphone and converted into a control command, which can be transmitted to a gaming console connected to the TV. The gaming console can update game actions in real time (e.g., moving the car) based on the control command.

In some embodiments, multiple controlling devices can perform remote control operations on a single controlled device at the same time. For example, in the driving game example, two (or more) smartphones (or other mobile devices) can be connected to the game console at the same time and transmit driving control information to the game console simultaneously to control two cars in the same race session. In fact, any type of remote control operations can be performed using the disclosed methods and apparatus of the disclosure. Detailed embodiments are described in the paragraphs below.

In other embodiments, a controlling device (e.g., mobile phone) can control multiple controlled devices at the same time. In particular, the controlling device can discover the multiple controlled devices using the same mechanism (e.g., sending out a broadcast including the IP address and/other connection information of the controlling device over the network). It can receive responses from the multiple devices and use the device information in each of these responses to connect to each of the controlled devices. Once connected, the controlling device can broadcast additional information such as control command via the connections to each of the controlled devices. In some embodiments, the multiple controlled devices can be on the same network (e.g., a LAN). In other embodiments, they can be on different networks (e.g., some on a LAN and others on a WAN). So long as the controlling device can connect to the different networks and transmit information over the different networks, it can perform remote control of the multiple controlled devices simultaneously. For example, the controlling device can send a control command over a TCP connection to one of the controlled devices and, at the same time, send the same command via an instant messaging account to another controlled device to perform the same operation on the multiple controlled devices. This enable a user to use his smartphone to, for example, initiate a download of the same video on both his laptop and tablet PC at the same time.

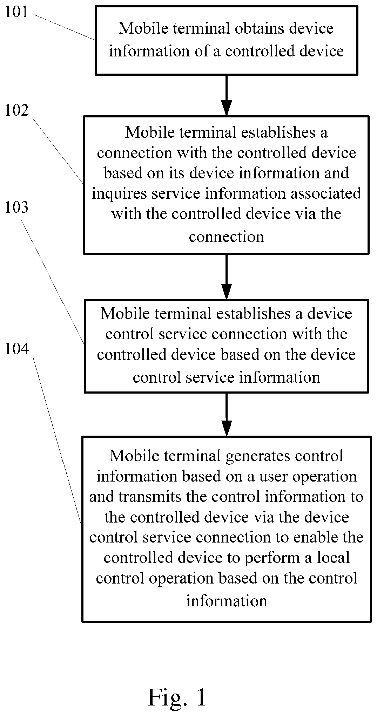

The embodiments can provide a device control service capability on a LAN. To provide this capability, problems relating to device discovery, service inquiry, control command transmission, and network connection need to be resolved. Fig. 1 illustrates the exemplary steps in a device control method that resolves these problems. The method can include the following steps.

101: A mobile terminal can obtain device information of a controlled device.

In particular, when discovering a device on a LAN, the method can include, for example, the mobile terminal transmitting a broadcast over the LAN to search for devices connected to the LAN; after receiving the broadcast, a device on the LAN responding to the mobile terminal with its device information by using the address and port number in the broadcast.

When both the mobile terminal and another device (e.g., a controlled device) are connected to the LAN and logged into an application using the same account, e.g., when both the mobile terminal and another device on the LAN use a public account to log into an application, the method can further include, for example, the mobile terminal inquiring device information of the other device logged into the public account based on the public account to establish a connection with the other device to enable device control.

That is, the mobile terminal can obtain device information through shared login account and connect to the other device over a LAN or WAN using the device information to obtain service information of the device. A device control service connection with the device can then be established to enable controlling of the device.

102: The mobile terminal can establish a connection with the controlled device based on its device information and inquire service information associated with the controlled device via the connection. The service information can include device control service information.

103: The mobile terminal can establish a device control service connection with the controlled device based on the device control service information.

In particular, the device information obtained in step 101 can include a device information chart of multiple devices. The corresponding device control service information can include a device control service information chart of multiple devices. This step can include, for example, the mobile terminal establishing device control service connections with the multiple devices separately based on the device control service chart to allow the mobile terminal to switch its control target quickly. That is, the mobile device can quickly switch among the multiple devices and perform device control operations.

In other aspect, the device control service information of the above-described devices can include the port number of the device control service port of each device. When establishing a connection with each device, the mobile terminal can establish a device control service connection with the device control service port of the device based on the port number.

104: The mobile terminal can generate control information based on a user operation and transmit the control information to the controlled device via the device control service connection to enable the controlled device to perform a local control operation based on the control information.

For example, the user operation can include a multi-point touch and/or gesture operation. The mobile terminal can generate operation information corresponding to the user operation and transmit the encapsulated operation information to the controlled device. Alternatively, the mobile terminal can generate the specific control command corresponding to the operation information after generating the operation information and then transmit the encapsulated control command to the controlled device.

That is, this step can include, for example, the mobile terminal generating control information based on a user's multi-point touch and/or gesture operation. The control information can include multi-point touch and/or gesture information to allow the controlled device to generate a corresponding control command based on the control information and to execute the control command.

Alternatively, the mobile terminal can generate multi-point touch and/or gesture information based on a user's multi-point touch and/or gesture operation, and generate control information based on the multi-point touch/gesture information. The control information can include a control command corresponding to the multi-touch touch and/or gesture operation to allow the controlled device to perform the control command after receiving the control information.

For example, if the user gesture is a single-finger movement, the mobile terminal can generate single-finger movement information based on this operation to indicate that the current user operation includes a single-finger movement. Then, the mobile terminal can transmit this information directly to the controlled device, or transmitting a control command to the controlled device after converting this information into a corresponding control command (e.g., a cursor movement command). The exact implementation can depend on the device control protocol agreed upon between the mobile terminal and the controlled device, and can be configured or regulated based on individual circumstances.

Fig. 2 is a flow chart illustrating the exemplary steps of a device control method on a LAN. In this embodiment, the LAN can be a Wi-Fi network. The mobile terminal can be a mobile phone. The device on the LAN can be a PC. Fig. 3 illustrates an embodiment in which the mobile phone and the PC are connected via the Wi-Fi network. The method can include the following exemplary steps.

201: Device discovery. For example, after the mobile phone starts a particular program (e.g., a controller application of a device control service), it can transmit a broadcast in, for example, the user datagram protocol (UDP) via the LAN to discover other devices on the network. When the PC receives the broadcast, it can return device information based on the IP address and port number of the mobile phone. The device information can include the port number and IP address of the PC.

202: Service discovery. For example, the mobile phone can attempt to establish a transmission control protocol (TCP) connection to the specific port of the device (e.g., the PC) discovered in step 201. After the connection is successfully established, the mobile phone can inquire the service information of the device (e.g., the PC) via the connection.

203: Service inquiry, more specifically, discovering device control services. For example, the mobile phone can obtain the service port number of the "expanded service" (in this embodiment, the expanded service can be, for example, a device control service).

204: After obtaining the service information of the "expanded service," the mobile phone can attempt to establish a TCP connection with the port number of the expanded service of the device (e.g., the PC). After successfully establishing the connection, the mobile phone can prepare to transmit control information.

205: The mobile phone can generate different commands based on the user's gestures. The command can be for, for example, cursor movement, downward scrolling of a page, upward scrolling of a page, and closing the current application. The gesture can be self-defined. For example, as defaulted, single-finger movement can be associated with cursor movement; two-finger upward movement can be associated with an upward scrolling of a page; two-finger downward movement can be associated with a downward scrolling of a page; and three-finger simultaneous touch can be associated with closing the current application. It should be understood that, in this embodiment, the mobile device (e.g., the mobile phone) can generate different commands based on a user's touch operations.

206: The mobile phone can transmit the command to the PC to be executed by the PC to enable device control.

Fig. 4 is a flowchart illustrating the exemplary steps of an embodiment, in which the mobile terminal (e.g., a mobile phone) and the controlled device (e.g., a PC) are connected via a WAN.

301: the mobile phone and the PC can log into the same instant messaging account. The mobile phone can detect the one or more devices logged into the same instant messaging account for the purpose of discovering a controlled device.

302: The mobile terminal can establish a connection with the PC via a routing server for instant messages. When a device (e.g., the PC) is discovered in step 301, the information of the device can include an address on the LAN. And if the mobile phone and the PC are on the same LAN, the mobile phone can utilize the method of steps 202-206 discussed above to facilitate the follow-up device control process. Otherwise, the mobile phone can provide device control by following step 303.

303: The mobile phone can generate a device control command and transmit the command to the PC via the instant message routing server. It should be noted that the mobile phone can accurately transmit the command to the PC if the instant messaging application includes a device control function.

The exemplary ways in which the mobile phone can generate a command are described in the embodiments above and therefore not provided again here.

304: The PC can receive the device control command and execute a corresponding operation based on the command.

Fig. 5 is a structure diagram of a device control apparatus, according to an embodiment of the disclosure. The device control apparatus can be part of the mobile terminal. The apparatus can include: a device discovering module 10 that can obtain device information of a controlled device; a service inquiry module 12 that can inquire service information associated with the controlled device based on the device information and the established connection, the service information including device control service information; a device control connecting module 14 that can establish a device control service connection to the controlled device based on the device control service information; and a device control module 16 that can generate control information based on a user operation and transmit the control information to the controlled device over the device control service connection to allow the controlled device to perform local control based on the control information.

In some embodiments, the device information can include a device information chart of multiple devices. The device control service information can include a device control service information chart of the multiple devices. The device control connecting module 14 can establish device control service connections to the multiple devices, separately, based on the device control service information chart to allow the mobile terminal to switch quickly among the multiple device control targets. When the device control service information include the port number of the device control service port, the device control connection module 14 can establish a device control service connection to the device control service port of the controlled device based on the port number.

The user operation can include a multi-point touch and/or gesture operation. The device control module 16 can also generate control information based the multi-point touch and/or gesture operation. The control information can include multi-point touch and/or gesture information to allow the controlled device to generate a control command corresponding to the control information and execute the control command.

Alternatively, the device control module 16 can generate multi-point touch and/or gesture information based on the multi-point touch and/or gesture operation, and generate control information based on the multi-point touch and/or gesture information. The control information can include a control command corresponding to the multi-touch and/or gesture control operation and when received by the controlled device, allow the control device to execute the command.

As illustrated in Fig. 6, the device discovery module 10 can also include: a broadcast unit 100 that can transmit broadcast over the LAN to discover devices; and a device information receiving unit 102 that can receive device information returned from a device on the LAN to the mobile terminal based on the mobile terminal's address and port number in the broadcast, after the device receives the broadcast. The device discovery module 10 can also include an account discovering unit that can inquire, based on a public account, device information of a device associated with the public account, when the mobile terminal and the controlled device log into an application using the public account. Fig. 6 illustrates a device discovery module including only the broadcasting unit and the device information receiving unit. However, the device discovery module can also include only the account discovering unit or all three of these units.

Embodiments of the disclosure also disclose a mobile terminal including the device control apparatus described above.

It should be noted that the technical details and functions of the above-described apparatus can be the same as the steps in the processes described above and, thus, are not repeated here.

In the embodiments, the device control process can be realized through processes including, for example, discovering a device, discovering the device's device control service, and generating and transmitting of control information. This can provide a technical solution of device control among different devices, thereby solving the problems with the existing technology and increasing the interactions among the devices on a LAN.

At the same time, the embodiments can also support mobile terminal performing device control using multi-point touch and/or gesture operations. When the condition of the network allows, the mobile terminal can also control a device via both a LAN and a WAN. When performing device control, the mobile terminal can connect to multiple terminals at the same time to allow fast switching of the control target.

Based on the above-described embodiments, a person skilled in the art can understand that parts of or the whole process described in each of the above embodiments can be performed by hardware in accordance with instructions from one or more computer programs. The one or more computer programs can be stored in a non-transitory readable medium, and when executed, perform the processes described in these embodiments. The non-transitory computer readable medium can be a floppy disk, CD, read-only memory (ROM), or random access memory (RAM).

In some embodiments, one or more of the modules in Figs. 5 and 6 can be stored and/or transported within any non-transitory computer-readable storage medium for use by or in connection with an instruction execution system, apparatus, or device, such as a computer-based system, processor-containing system, or other system that can fetch the instructions from the instruction execution system, apparatus, or device and execute the instructions. In the context of this file, a "non-transitory computer-readable storage medium" can be any medium that can contain or store the program for use by or in connection with the instruction execution system, apparatus, or device. The non-transitory computer readable storage medium can include, but is not limited to, an electronic, magnetic, optical, electromagnetic, infrared, or semiconductor system, apparatus or device, a portable computer diskette (magnetic), a random access memory (RAM) (magnetic), a read-only memory (ROM) (magnetic), an erasable programmable read-only memory (EPROM) (magnetic), a portable optical disc such a CD, CD-R, CD-RW, DVD, DVD-R, or DVD-RW, or flash memory such as compact flash cards, secured digital cards, USB memory devices, memory sticks, and the like.

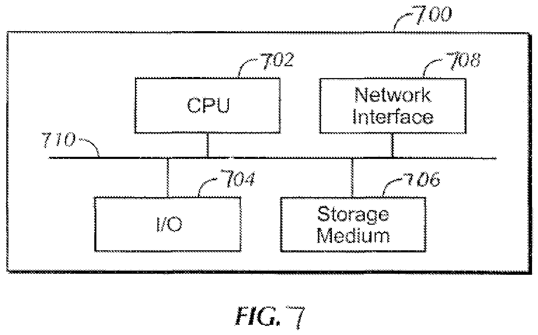

The non-transitory computer readable storage medium can be part of a computing system serving as the device control apparatus. Fig. 7 illustrates exemplary common components of one such computing system. As illustrated, the system 700 can include a central processing unit (CPU) 702, I/O components 704 including, but not limited to one or more of display, keypad, touch screen, speaker, and microphone, storage medium 706 such as the ones listed in the last paragraph, and network interface 708, all of which can be connected to each other via a system bus 710. The storage medium 706 can include the modules of Figs. 5 and 6 if the system is a device control apparatus in one of the embodiments discussed above.

Although embodiments of this disclosure have been fully described with reference to the accompanying drawings, it is to be noted that various changes and modifications will become apparent to those skilled in the art. Such changes and modifications are to be understood as being included within the scope of embodiments of this disclosure as defined by the appended claims.

## Claims

1. A device control method, comprising:
a mobile terminal discovering a controlled device when the mobile terminal and the controlled device log into a same instant messaging account (301);
the mobile terminal inquiring device information of the controlled device through the same instant messaging account to establish a connection with the controlled device;
the mobile terminal establishing a connection with the controlled device based on the obtained device information and inquiring service information of the controlled device via the established connection, the service information comprising device control service information (202,203);
the mobile terminal establishing a device control service connection with the controlled device based on the device control service information (204); and
the mobile terminal generating control information based on a user operation performed on the mobile terminal and transmitting the control information to the controlled device via the device control service connection to control the controlled device based on the control information (205,206).

2. The method of claim 1, wherein the user operation comprises a multi-point touch and gesture operation, and wherein the mobile terminal generating control information based on the user operation comprises:
the mobile terminal generating control information based on the user's multi-point touch and/or gesture operation to allow the controlled device to generate a corresponding control command based on the control information and execute the control command, or
the mobile terminal generating multi-point touch and/or gesture information based on a user's multi-point touch and/or gesture operation, and generating control information based on the multi-point touch and/or gesture information, the control information comprising a control command corresponding to the multi-point touch and/or gesture operations, to allow the controlled device to execute the control command after receiving the control command.

3. The method of claim 1, wherein the device information comprises a device information chart of multiple devices, the device control service information comprises a device control service chart of multiple devices, and wherein the mobile terminal establishing the device control service connection with the controlled device based on the device control service information comprises:
the mobile terminal establishing device control service connections with multiple devices, separately, based on the device control service information chart to allow the mobile terminal to switch a device control target.

4. The method of claim 1, wherein the device control service information comprises a port number of a device control service port, and wherein the mobile terminal establishing the device control service connection with the controlled device based on the device control service information comprises:
the mobile terminal establishing a device control service connection with the device service control port of the controlled device based on the port number.

5. A remote control device, comprising:
an input/output device (704) configured to receive a user input,
a network interface (708) configured to connect the remote control device to a network,
a broadcast module configured to send a message via the network interface to the network,
an information receiving module configured to receive device information and service information from the network via the network interface,
an account discovering module configured to discover a controlled device when the remote control device and the controlled device log into a same instant messaging account, wherein the received device information is device information of the controlled device logged into the same instant messaging account, and
a device control connecting module configured to establish a connection to the controlled device on the network based on the received device information,
a service inquiry module configured to inquire service information of the controlled device via the established connection, the service information comprising device control service information, wherein the received service information is the service information of the controlled device, wherein
the device control connecting module is further configured to establish a device control service connection with the controlled device based on the device control service information, wherein the remote control device further comprises:
a device control module configured to generate control information based on a user operation performed on the remote control device and transmit the control information to the controlled device over the established device control service connection.

6. The remote control device of claim 5, wherein the user input comprises at least one of a touch input, gesture input, text input, audio input, and visual input.

7. The remote control device of claim 6, wherein the received service information is associated with a device control service provided by the controlled device on the network.

8. The remote control device of claim 5, wherein the device information comprises connection information that enables a connection with the controlled device.

## Patentansprüche

1. Gerätesteuerverfahren, umfassend:
ein mobiles Endgerät stellt ein gesteuertes Gerät fest, wenn sich das mobile Endgerät und das gesteuerte Gerät in denselben Instant Messaging Account einwählen (301);
wobei das mobile Endgerät Geräteinformationen des gesteuerten Geräts durch denselben Instant Messaging Account abfragt, um eine Verbindung mit dem gesteuerten Gerät herzustellen;
das mobile Endgerät stellt eine Verbindung mit dem gesteuerten Gerät auf Grundlage der erhaltenen Geräteinformationen her und fragt Dienstinformationen des gesteuerten Geräts über die hergestellte Verbindung ab, wobei die Dienstinformationen Gerätesteuerdienstinformationen umfassen (202, 203);
das mobile Enderät stellt eine Gerätesteuerdienstverbindung mit dem gesteuerten Gerät auf Grundlage der Gerätesteuerinformationen her(204); und
das mobile Endgerät generiert Steuerinformationen auf Grundlage einer am mobilen Endgerät vorgenommenen Benutzerbetätigung und überträgt die Steuerinformationen über die Gerätesteuerdienstverbindung an das gesteuerte Gerät, um das gesteuerte Gerät auf Grundlage der Steuerinformationen zu steuern (204, 206).

2. Verfahren nach Anspruch 1, wobei die Benutzerbetätigung einen Mehrpunkt-Berührungs- und Gestenvorgang umfasst, und wobei der Vorgang, bei dem das mobile Endgerät Steuerinformationen auf Grundlage der Benutzerbetätigung generiert, umfasst:
das mobile Endgerät generiert Steuerinformationen auf Grundlage des Mehrpunkt-Berührungs- und/oder Gestenvorgangs des Benutzers, um das gesteuerte Gerät einen entsprechenden Steuerbefehl auf Grundlage der Steuerinformationen generieren und den Steuerbefehl ausführen zu lassen, oder
das mobile Endgerät generiert Mehrpunkt-Berührungs- und/oder Gesteninformationen auf Grundlage des Mehrpunkt-Berührungs- und/oder Gestenvorgangs des Benutzers, und generiert Steuerinformationen auf Grundlage der Mehrpunkt-Berührungs- und/oder Gesteninformationen, wobei die Steuerinformationen einen Steuerbefehl umfassen, der den Mehrpunkt-Berührungs- und/oder Gestenvorgängen entspricht, um das gesteuerte Gerät den Steuerbefehl nach Empfang des Steuerbefehls ausführen zu lassen.

3. Verfahren nach Anspruch 1, wobei die Geräteinformationen eine Geräteinformationsaufstellung mehrerer Geräte umfassen, die Gerätesteuerdienstinformationen eine Gerätesteuerdienstaufstellung mehrerer Geräte umfassen, und wobei der Vorgang, bei dem das mobile Endgerät die Gerätesteuerdienstverbindung mit dem gesteuerten Gerät auf Grundlage der Gerätesteuerdienstinformationen herstellt, umfasst:
ein mobiles Endgerät stellt Gerätesteuerdienstverbindungen mit mehreren Geräten separat auf Grundlage der Gerätesteuerdienstinformationsaufstellung her, um das mobile Endgerät ein Gerätesteuerziel wechseln zu lassen.

4. Verfahren nach Anspruch 1, wobei die Gerätesteuerdienstinformationen eine Anschlussnummer eines Gerätesteuerdienstanschlusses umfassen, und wobei der Vorgang, bei dem das mobile Endgerät die Gerätesteuerdienstverbindung mit dem gesteuerten Gerät auf Grundlage der Gerätesteuerdienstinformationen herstellt, umfasst:
das mobile Endgerät stellt eine Gerätesteuerdienstverbindung mit dem Gerätesteuerdienstanschluss des gesteuerten Geräts auf Grundlage der Anschlussnummer her.

5. Fernsteuerungseinrichtung, umfassend:
eine Eingabe-/Ausgabevorrichtung (704), die dazu ausgelegt ist, ein Benutzereingabe aufzunehmen,
eine Netzwerkschnittstelle (708), die dazu ausgelegt ist, die Fernsteuerungseinrichtung mit einem Netzwerk zu verbinden,
ein Rundfunkmodul, das dazu ausgelegt ist, eine Nachricht über die Netzwerkschnittstelle an das Netzwerk zu schicken,
ein Informationsempfangsmodul, das dazu ausgelegt ist, Geräteinformationen und Dienstinformationen vom Netzwerk über die Netzwerkschnittstelle zu empfangen,
ein Account-Feststellungsmodul, das dazu ausgelegt ist, ein gesteuertes Gerät festzustellen, wenn sich die Fernsteuerungseinrichtung und das gesteuerte Gerät in denselben Instant Messaging Account einwählen, wobei es sich bei den empfangenen Geräteinformationen um Geräteinformationen des in denselben Instant Messaging Account eingewählten, gesteuerten Geräts handelt, und
ein Gerätesteuerverbindungsmodul, das dazu ausgelegt ist, eine Verbindung mit dem gesteuerten Gerät im Netzwerk auf Grundlage der empfangenen Geräteinformationen herzustellen,
ein Dienstabfragemodul, das dazu ausgelegt ist, Dienstinformationen des gesteuerten Geräts über die hergestellte Verbindung abzufragen, wobei die Dienstinformationen Gerätesteuerdienstinformationen umfassen, wobei es sich bei den empfangenen Dienstinformationen um die Dienstinformationen des gesteuerten Geräts handelt, wobei
das Gerätesteuerungsverbindungsmodul darüber hinaus dazu ausgelegt ist, eine Gerätesteuerdienstverbindung mit dem gesteuerten Gerät auf Grundlage der Gerätesteuerdienstinformationen herzustellen, wobei die Fernsteuerungseinrichtung darüber hinaus umfasst:
ein Gerätesteuermodul, das dazu ausgelegt ist, Steuerinformationen auf Grundlage einer an der Fernsteuerungseinrichtung vorgenommenen Benutzerbetätigung zu generieren und die Steuerinformationen über die hergestellte Gerätesteuerdienstverbindung an das gesteuerte Gerät zu übertragen.

6. Fernsteuerungseinrichtung nach Anspruch 5, wobei die Benutzereingabe eine Berührungseingabe, Gesteneingabe, Texteingabe, Audioeingabe und/oder visuelle Eingabe umfasst.

7. Fernsteuerungseinrichtung nach Anspruch 6, wobei die empfangenen Dienstinformationen mit einem Gerätesteuerdienst zusammenhängen, der durch das gesteuerte Gerät im Netzwerk bereitgestellt wird.

8. Fernsteuerungseinrichtung nach Anspruch 5, wobei die Geräteinformationen Verbindungsinformationen umfassen, die eine Verbindung mit dem gesteuerten Gerät ermöglichen.

## Revendications

1. Procédé de commande de dispositif, comprenant :
la découverte, par un terminal mobile, d'un dispositif commandé lorsque le terminal mobile et le dispositif commandé se connectent à un même compte de messagerie instantanée (301) ;
la sollicitation, par le terminal mobile, d'informations de dispositif du dispositif commandé via le même compte de messagerie instantanée pour établir une connexion avec le dispositif commandé ;
l'établissement, par le terminal mobile, d'une connexion avec le dispositif commandé sur la base des informations de dispositif obtenues et la sollicitation d'informations de service du dispositif commandé via la connexion établie, les informations de service comprenant des informations de service de commande de dispositif (202, 203) ;
l'établissement, par le terminal mobile, d'une connexion de service de commande de dispositif avec le dispositif commandé sur la base des informations de service de commande de dispositif (204) ; et
la génération, par le terminal mobile, d'informations de commande sur la base d'une opération d'utilisateur effectuée sur le terminal mobile et la transmission des informations de commande au dispositif commandé via la connexion de service de commande de dispositif pour commander le dispositif commandé sur la base des informations de commande (205, 206).

2. Le procédé de la revendication 1, sachant que l'opération d'utilisateur comprend une opération tactile et gestuelle multipoint, et sachant que la génération, par le terminal mobile, d'informations de commande sur la base de l'opération d'utilisateur comprend :
la génération, par le terminal mobile, d'informations de commande sur la base de l'opération tactile et/ou gestuelle multipoint de l'utilisateur pour permettre au dispositif commandé de générer une consigne de commande correspondante sur la base des informations de commande et d'exécuter la consigne de commande, ou
la génération, par le terminal mobile, d'informations tactiles et/ou gestuelles multipoint sur la base de l'opération tactile et/ou gestuelle multipoint de l'utilisateur, et la génération d'informations de commande sur la base des informations tactiles et/ou gestuelles multipoint, les informations de commande comprenant une consigne de commande correspondant aux opérations tactiles et/ou gestuelles multipoint, pour permettre au dispositif commandé d'exécuter la consigne de commande après réception de la consigne de commande.

3. Le procédé de la revendication 1, sachant que les informations de dispositif comprennent une charte d'informations de dispositif de multiples dispositifs, les informations de service de commande de dispositif comprennent une charte de service de commande de dispositif de multiples dispositifs, et sachant que l'établissement, par le terminal mobile, de la connexion de service de commande de dispositif avec le dispositif commandé sur la base des informations de service de commande de dispositif comprend :
l'établissement, par le terminal mobile, de connexions de service de commande de dispositif avec de multiples dispositifs, séparément, sur la base de la charte d'informations de service de commande de dispositif pour permettre au terminal mobile de commuter une cible de commande de dispositif.

4. Le procédé de la revendication 1, sachant que les informations de service de commande de dispositif comprennent un numéro de port d'un port de service de commande de dispositif, et sachant que l'établissement, par le terminal mobile, de la connexion de service de commande de dispositif avec le dispositif commandé sur la base des informations de service de commande de dispositif comprend :
l'établissement, par le terminal mobile, d'une connexion de service de commande de dispositif avec le port de service de commande de dispositif du dispositif commandé sur la base du numéro de port.

5. Dispositif de commande à distance, comprenant :
un dispositif d'entrée/sortie (704) configuré pour recevoir une entrée d'utilisateur,
une interface de réseau (708) configurée pour connecter le dispositif de commande à distance à un réseau,
un module de diffusion configuré pour envoyer un message via l'interface de réseau au réseau,
un module de réception d'informations configuré pour recevoir des informations de dispositif et des informations de service depuis le réseau via l'interface de réseau,
un module de découverte de compte configuré pour découvrir un dispositif commandé lorsque le dispositif de commande à distance et le dispositif commandé se connectent à un même compte de messagerie instantanée, sachant que les informations de dispositif reçues sont des informations de dispositif du dispositif commandé connecté au même compte de messagerie instantanée, et
un module de connexion de commande de dispositif configuré pour établir une connexion au dispositif commandé sur le réseau sur la base des informations de dispositif reçues,
un module de sollicitation de service configuré pour solliciter des informations de service du dispositif commandé via la connexion établie, les informations de service comprenant des informations de service de commande de dispositif, sachant que les informations de service reçues sont les informations de service du dispositif commandé, sachant que
le module de connexion de dispositif de commande est en outre configuré pour établir une connexion de service de commande de dispositif avec le dispositif commandé sur la base des informations de service de commande de dispositif, sachant que le dispositif de commande à distance comprend en outre :
un module de commande de dispositif configuré pour générer des informations de commande sur la base d'une opération d'utilisateur effectuée sur le dispositif de commande à distance et transmettre les informations de commande au dispositif commandé via la connexion de service de commande de dispositif établie.

6. Le dispositif de commande à distance de la revendication 5, sachant que l'entrée d'utilisateur comprend au moins l'une d'une entrée tactile, d'une entrée gestuelle, d'une entrée textuelle, d'une entrée audio, et d'une entrée visuelle.

7. Le dispositif de commande à distance de la revendication 6, sachant que les informations de service reçues sont associées à un service de commande de dispositif fourni sur le réseau par le dispositif commandé.

8. Le dispositif de commande à distance de la revendication 5, sachant que les informations de dispositif comprennent des informations de connexion qui permettent une connexion avec le dispositif commandé.
